# EUROPEAN PATENT SPECIFICATION

(11) **EP 0 651 492 B1**
(45) Date of publication and mention of the grant of the patent: **04.06.1997**
(21) Application number: 94116749.6
(22) Date of filing: 24.10.1994
(51) Int. Cl.: H02J 3/00

(54) **Power supply system particularly for linear actuators for beds or couches with variable-angle headboard and/or footboard**
Stromversorgungssystem insbesondere für Linearantriebe für Betten und Sofa mit neigungsverstellbaren Kopf- und Fussstützen
Système d'alimentation électrique en particulier pour actionneurs linéaires pour des lits ou canapés avec affuie tête et/ou pied inclinable

(30) Priority: 27.10.1993 IT MI932289
(43) Date of publication of application: 03.05.1995
(73) Proprietor: CIAR S.r.l., I-61100 Pesaro (IT)
(72) Inventor: Marcantoni, Egidio, I-61100 Pesaro (IT)
(74) Representative: Modiano, Guido, Dr.-Ing.

(56) References cited:
- WO-A-93/11593
- DE-A- 2 229 160
- DE-A- 3 235 432
- PATENT ABSTRACTS OF JAPAN vol. 9, no. 31 (E-295) (1754) 9 February 1985 & JP-A-59 175 104 (MITSUBISHI) 3 October 1984
- PATENT ABSTRACTS OF JAPAN vol. 6, no. 170 (E-128) (1048) 3 September 1982 & JP-A-57 088 707 (MITSUBISHI) 2 June 1982

## Description

The present invention relates to a power supply system particularly for linear actuators for beds or couches with variable-angle headboard and/or footboard.

As is known, there are beds or couches with variable-angle headboard and/or footboard. These kinds of bed or couch are provided with electric linear actuators that allow to adjust the headboard and/or footboard by means of the axes of the actuators, which are driven by electric motors.

It is evident that the configuration assumed by beds or couches is adjusted in a few seconds and relatively infrequently. Accordingly, the inactive period of the motors of the linear actuators is considerably longer than their active period.

During inactive periods the actuator power supply system is constantly connected to the mains, since it is rather awkward to disconnect the plug of the system from the power outlet when the bed or couch do not require adjustment.

Since actuator motors are powered with a voltage that is relatively low with respect to the mains voltage (typically 24V), existing power supply systems require a transformer which has the drawback that it still absorbs a significant amount of current even during the inactive periods of the linear actuators (and of their electric motors), leading to a waste of electric power.

The transformer connected to the mains furthermore produces vibrations (at 50 Hz) that can cause discomfort to users. Recent scientific studies furthermore claim that the electromagnetic radiation emitted by the transformer can be harmful to the health of potential users.

In order to obviate these problems there is a solution that uses a low-voltage battery which powers the coil of a relay located in the plug of the power supply system. When the bed or couch requires adjustment, the battery, by means of a switch, activates the relay, which connects the plug to the transformer, supplying it with the mains voltage.

This solution is efficient but requires a dry battery (typically of the 9 volt type) which discharges in the course of time and can be difficult to replace, since power supply systems are usually located below the couch/bed due to obvious aesthetic and functional reasons.

This solution furthermore requires four wires for the plug: two for the mains power supply and two for supplying the relay coil. Accordingly, any replacement of the plug becomes a difficult task for the user and often requires the intervention of specialized technicians.

Furthermore, the use of four wires and of a special plug that contains the relay entails hardly negligible space occupation and costs.

Another solution, similar to the preceding one, includes a second transformer which is located in the plug of the power supply system and provides the low-voltage power supply for the relay. This solution, too, requires a very bulky plug and four wires for the plug, since the relay is again energized by a switch located in the bed/couch.

A principal aim of the present invention is to eliminate or substantially reduce the drawbacks described above by providing a power supply system particularly for linear actuators for beds or couches with variable-angle headboard or footboard which reduces the consumption of electric power absorbed by the transformer of the system when the linear actuators are inactive.

Within the scope of this aim, an object of the present invention is to substantially reduce the electromagnetic vibrations and radiation emitted by the power supply system of the linear actuators.

Another object is to provide a power supply system that features easy maintenance, high reliability, relatively easy manufacturing and low costs.

This aim, these objects, and others which will become apparent hereinafter are achieved by a power supply system particularly for linear actuators for beds or couches with variable-angle headboard and/or footboard, which comprises a transformer suitable to convert the electric power supplied by the mains into voltage and current values that are suitable to drive at least one electric motor and means for rectifying said voltage and said current, characterized in that it comprises low heat-loss reactive means that are interposed between said transformer and said mains power supply and can be cut in during the periods in which said at least one motor is inactive, and bypass means that are suitable to cut out said reactive means, said bypass means being activated by a low-voltage power supply tapped from said transformer during the inactive period of said at least one motor.

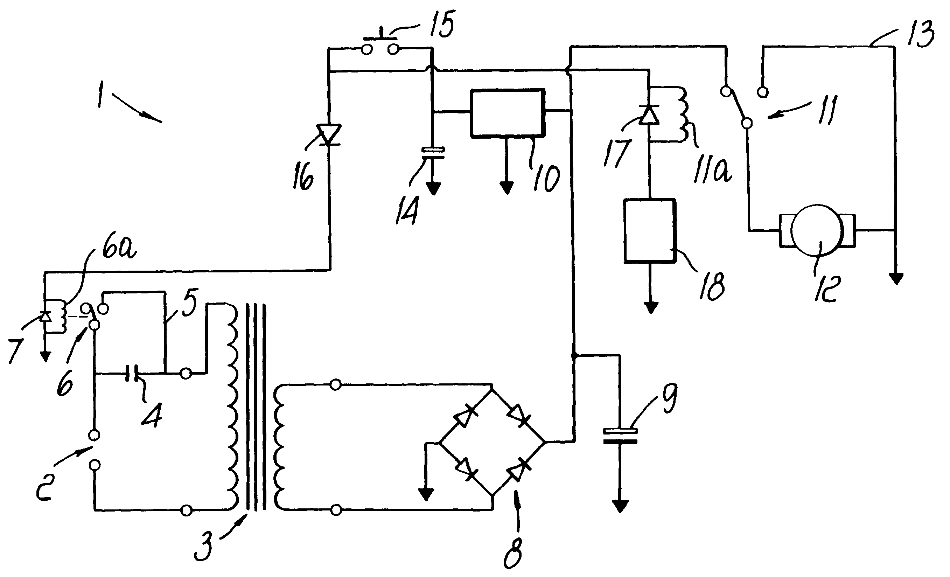

Further characteristics and advantages of the invention will become apparent from the following detailed description of a preferred but not exclusive embodiment of a power supply system particularly for linear actuators for beds or couches with variable-angle headboard and/or footboard according to the invention, illustrated only by way of non-limitative example in the accompanying drawing, wherein:

the only figure is the electric diagram of the system according to the invention.

With reference to the only figure, the reference numeral 1 designates the power supply system according to the present invention. The terminals for connection to the mains power (in practice a plug) are designated by the reference numeral 2. The primary winding of a transformer 3 for converting the power supplied by the mains is connected to the terminals 2. The transformer 3 has a high turns ratio between the primary winding and the secondary winding, so as to provide a current that is sufficient to drive the motors of the linear actuators and at the same time have a limited bulk and low costs.

The reactive means, constituted by a capacitor 4, are interposed between one of the terminals 2 and the transformer 3. The capacitance of the capacitor 4 is such as to have maximum reactance at the frequency of the mains voltage (normally 50-60 Hz).

The capacitor 4 can be cut out (bypassed) by the circuit formed by the transformer 3 and by the terminals 2 by virtue of a line 5 along which a relay 6 is placed. The relay 6 is energized by its coil 6a, which is connected to a protection diode 7.

The secondary winding of the transformer 3 is connected to a conventional bridge rectifier 8 whose output is connected to an electrolytic filtering capacitor 9. The output of the rectifier 8 is furthermore connected to a voltage regulator 10 and to a relay 11 for supplying power to an electric motor 12. The relay 11 switches the connection of the power supply terminal of the motor 12 between the rectifier 8 and the ground by means of the line 13.

The output of the regulator 10 has its own filtering capacitor 14. Said output of the regulator 10 is connected to the coil 6a of the relay 6 by means of a pushbutton switch 15 and a protection diode 16. The terminal of the switch 15 that is not connected to the voltage regulator 10 is connected to a coil 11a of the relay 11 for supplying power to the electric motor 12. Like the coil 6a, the coil 11a, too, is connected in parallel to a protection diode 17. The other terminal of the coil 11a is furthermore connected to a current regulator 18 which regulates the voltage at which the relay 11 is energized by means of the coil 11a.

The operation of the power supply system according to the present invention is as follows.

When the motor 12 is inactive, the relay 6 is deactivated and the capacitor 4 is included in the circuit composed of the primary winding of the transformer 3 and of the mains terminals. The maximum reactance of the capacitor 4 occurs at the mains frequency, and said capacitor behaves like a resistor having a high resistance value without however producing heat loss. Of course, even the capacitor 4 has an ohmic resistance of its own: however, it is negligible with respect to the resistance of a resistor having the same reactance value as the capacitor 4.

The capacitor 4 substantially reduces the current absorbed by the primary winding of the transformer (typically by about 20 times) so that absorbed power, electromagnetic radiation, and vibrations of the transformer are also reduced proportionally.

Owing to this situation, the voltage across the secondary winding of the transformer 3, and accordingly also at the output of the rectifier 8, is reduced with respect to the output voltage of the rectifier 8 when the electric motor 12 is active. This voltage is regulated by the regulator 10 and can be applied to the coil 6a by means of the switch 15 (which is normally open).

If it is necessary to adjust the bed/couch, the switch 15 is closed and the low voltage from the transformer 3 is applied to the coil 6a, so that the relay 6 switches from the capacitor 4 to the bypass line 5.

Once the capacitor 4 has been cut out, the transformer 3 is directly supplied by mains power. Accordingly, the voltage at the output of the rectifier 8 is also higher and the output current of the rectifier 8 is suitable to drive the electric motor 12. Said voltage is also applied to the coil 11a of the relay 11 by means of the regulator 10 and the switch 15.

Activation of the relay 11 is set by means of the current regulator 18 which is associated with the coil 11a, so that the relay 11 is not energized by the low voltage that is present when the capacitor 4 is connected. The energization voltage of the relay 11 is normally slightly higher than said low voltage, which is sufficient to activate the relay 6. In this manner the undesirable supply of power to the motor at the low voltage is avoided.

Once the suitable voltage has been applied to the coil 11a, the relay 11 switches from the ground line to the line connected to the rectifier 8, supplying the motor 12 with the operating voltage and current.

When it is necessary to interrupt the operation of the motor 12, the switch 15 is opened and the relay 6 once again includes the capacitor 4 between the mains terminals 2 and the transformer 3, and the system returns to its inactive state.

It should be stressed that all the components of the system, except for the terminals 2 of the plug, are located in a single block which is part of the structure of the bed or couch.

The invention thus conceived is susceptible of numerous modifications and variations.

In practice, the materials employed, as well as the shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Power supply system particularly for linear actuators for beds or couches with variable-angle headboard and/or footboard, which comprises a transformer (3) suitable to convert the electric power supplied by a mains power supply (2) into voltage and current values that are suitable to drive at least one electric motor (12) and means (8,9) for rectifying said voltage and said current, characterized in that it comprises low heat-loss reactive means (4) that are interposed between said transformer (3) and said mains power supply (2) and can be cut in during the periods in which said at least one motor is inactive, and bypass means (5,6) that are suitable to bypass said reactive means (4), said bypass means (5,6) being activated by a low-voltage power supply (10) tapped from said transformer (3) during the inactive period of said at least one motor (12).

2. Power supply system according to claim 1, characterized in that said reactive means are constituted by at least one capacitor (4).

3. Power supply system according to one or more of the preceding claims, characterized in that said bypass means include a bypass line (5) that is parallel-connected to said reactive means (4).

4. Power supply system according to one or more of the preceding claims, characterized in that said bypass means include a relay (6) that is placed along said bypass line (5) and whose coil (6a) is activated by said low voltage power supply (10).

5. Power supply system according to one or more of the preceding claims, characterized in that the power supplied to said motor (12) is regulated by virtue of switching means (11) that can be activated by a voltage that is higher than said low voltage.

6. Power supply system according to claim 5, characterized in that said switching means comprise a relay (11) whose coil (11a) is connected to said transformer (3) via said low-voltage power supply (10).

7. Power supply system according to one or more of the preceding claims, characterized in that said low voltage is applied to said bypass means (5,6) by virtue of a switch (15) that is located between said bypass means (5,6) and said means (8,9) for rectifying said voltage and said current.

## Patentansprüche

1. Stromversorgungssystem insbesondere für Linearantriebe von Betten oder Couches mit Kopfbrett und/oder Fußbrett mit variablem Neigungswinkel, mit einem Transformator (3) zum Wandeln der von einem Versorgungsnetz (2) gelieferten Stromversorgung in Strom- und Spannungswerte, die zum Speisen mindestens eines Elektromotors (12) geeignet sind, und mit Mitteln (8, 9) zum Gleichrichten der Spannung und des Stroms, dadurch **gekennzeichnet**, daß Reaktanzmittel (4) mit geringen Wärmeverlusten zwischen den Transformator (3) und das Versorgungsnetz (2) während inaktiver Perioden des mindestens einen Motors einschaltbar sind, und daß Nebenschlußmittel (5, 6), die zum Überbrücken der Reaktanzmittel (4) geeignet sind, durch eine von dem Transformator (3) während der inaktiven Periode des mindestens einen Motors (12) abgeleitete Niederspannungsversorgung (10) einschaltbar sind.

2. Stromversorgungssystem nach Anspruch 1, dadurch **gekennzeichnet**, daß die reaktanzmittel durch mindestens einen Kondensator (4) gebildet sind.

3. Stromversorgungssystem nach einem oder mehreren der vorhergehenden Ansprüche, dadurch **gekennzeichnet**, daß die Nebenschlußmittel eine Nebenschlußverbindung (5) parallel zu den Reaktanzmitteln (4) enthalten.

4. Stromversorgungssystem nach einem oder mehreren der vorhergehenden Ansprüche, dadurch **gekennzeichnet**, daß die Nebenschlußmittel ein Relais (6) enthalten, das im Zuge der Nebenschlußverbindung (5) angeordnet ist und dessen Wicklung (6a) durch die Niederspannungsversorgung (10) aktiviert wird.

5. Stromversorgungssystem nach einem oder mehreren der vorhergehenden Ansprüche, dadurch **gekennzeichnet**, daß die dem Motor (12) zugeführte Leistung durch Schaltmittel (11) reguliert wird, die durch eine gegenüber der Niederspannung höhere Spannung aktivierbar sind.

6. Stromversorgungssystem nach Anspruch 5, dadurch **gekennzeichnet**, daß die Schaltmittel ein Relais (11) enthalten, dessen Wicklung (11a) mit dem Transformator (3) über die Niederspannungsstromversorgung (10) verbunden ist.

7. Stromversorgungssystem nach einem oder mehreren der vorhergehenden Ansprüche, dadurch **gekennzeichnet**, daß die Niederspannung den Nebenschlußmitteln (5, 6) über einen Schalter (15) zugeführt wird, der zwischen den Nebenschlußmitteln (5, 6) und den Mitteln (8, 9) zum Gleichrichten der Spannung und des Stroms angeordnet ist.

## Revendications

1. Système d'alimentation électrique en particulier pour actionneurs linéaires pour des lits ou canapés avec appuie-tête et/ou pied inclinable, comprenant un transformateur (3) apte à convertir l'énergie électrique alimentée par l'alimentation du secteur (2), en valeurs de tension et de courant aptes à permettre l'entraînement d'au moins un moteur électrique (12) et des moyens (8,9) pour rectifier ladite tension et ledit courant, caractérisé en ce qu'il comporte des moyens réactifs à faible déperdition de chaleur (4), interposés entre ledit transformateur (3) et ladite alimentation du secteur (2) et qui peuvent être coupés lors de la période pendant laquelle ledit moteur est inactif, et des moyens de dérivation aptes à court-circuiter lesdits moyens réactifs (4), lesdits moyens de dérivation (5,6) étant actionnés par une alimentation basse tension (10) prise sur ledit transformateur (3) lors de la période inactive dudit moteur (12).

2. Système d'alimentation électrique selon la revendication 1, caractérisé en ce que lesdits moyens réactifs sont constitués par au moins une capacité (4).

3. Système d'alimentation électrique selon l'une ou plusieurs des revendications précédentes, caractérisé en ce que lesdits moyens de dérivation comprennent une ligne de dérivation (5) reliée en parallèle auxdits moyens réactifs (4).

4. Système d'alimentation électrique selon l'une ou plusieurs des revendications précédentes, caractérisé en ce que lesdits moyens de dérivation comprennent un relais (6) placé le long de ladite ligne de dérivation (5) et dont la bobine (6a) est activée par ladite alimentation (10) basse tension.

5. Système d'alimentation électrique selon l'une ou plusieurs des revendications précédentes, caractérisé en ce que l'énergie alimentant ledit moteur (12) est régulée grâce à des moyens interrupteurs (11) susceptibles d'être activés par une tension supérieure à ladite basse tension.

6. Dispositif d'alimentation électrique selon la revendication 5, caractérisé en ce que ledit moyen interrupteur comporte un relais (11) dont la bobine (11a) est reliée audit transformateur (3) par l'intermédiaire de ladite alimentation (10) basse tension.

7. Système d'alimentation électrique selon l'une ou plusieurs des revendications précédentes, caractérisé en ce que ladite basse tension est appliquée auxdits moyens de dérivation (5, 6) grâce à un interrupteur (15) situé entre lesdits moyens de dérivation (5, 6) et lesdits moyens pour rectifier ladite tension et ledit courant.
